# EUROPEAN PATENT SPECIFICATION

(11) **EP 3 124 125 B1**
(45) Date of publication and mention of the grant of the patent: **14.11.2018**
(21) Application number: 14887593.3
(22) Date of filing: 18.09.2014
(51) Int. Cl.: B05C 1/08, B05D 1/28, B05D 3/02, B29L 9/00, B29C 47/00, B29L 7/00

(54) **COATING DEVICE, COATING METHOD, AND METHOD FOR PRODUCING RESIN FILM HAVING COATING FILM**
BESCHICHTUNGSVORRICHTUNG, BESCHICHTUNGSVERFAHREN UND VERFAHREN ZUR HERSTELLUNG EINER HARZFOLIE MIT DEM BESCHICHTUNGSFILM
DISPOSITIF DE REVÊTEMENT, PROCÉDÉ DE REVÊTEMENT, ET PROCÉDÉ DE PRODUCTION DE FILM DE RÉSINE DOTÉ D'UN FILM DE REVÊTEMENT

(30) Priority: 28.03.2014 JP 2014067699
(43) Date of publication of application: 01.02.2017
(73) Proprietor: Toray Industries, Inc., Tokyo 103-8666 (JP)
(72) Inventor: NISHIMORI, Yutaka, Otsu-shi Shiga 520-8558 (JP); INOUE, Hiroyuki, Anpachi-gun Gifu 503-2395 (JP)
(74) Representative: Hoefer & Partner Patentanwälte mbB
(86) International application number: PCT/JP2014/074715
(87) International publication number: WO 2015/145817

(56) References cited:
- EP-A1- 0 768 118
- DE-A1-102010 030 804
- JP-A- 2003 190 857
- JP-A- 2008 238 082
- JP-A- 2011 050 883
- JP-A- 2011 088 098
- US-A- 5 497 702

## Description

### Technical Field of the Invention

Our invention relates to a coating device and a coating method.

### Background Art of the Invention

A rod coat method is a conventional method of uniformly applying coating fluid to the surface of web such as thermoplastic resin film conveyed. In this method, a coating bar extending in a width direction of the web is pushed onto the lower face of the moving web to scrape off (measure) coating fluid excessively supplied to the web with the coating bar. The coating bar is pushed onto the web and rotated with frictional force generated on the web or driving force given with a motor or the like. The coating bar tends to bend with its own weight or reactive force received from the web because it is generally shaped like a rod having a diameter of tens mm and a length of hundreds mm to thousands mm. To prevent such a bending, Patent document 1 discloses a method in which a coating bar is supported from below with a support which has a V-shaped cross section and extends in a width direction of the coating bar. This method, however, might have a streak of fault from a defective rotation caused by friction between the coating bar and the support having V-shaped cross section. Further, in this method, a coating fluid applying bar and a measurement bar both rotating might abrade the support having V-shaped cross section to make abrasion powder to be applied to the web together with the coating fluid to cause faults of foreign matters.

Patent document 2 discloses a coating device having a roller rotatable as a supporting means. A plurality of such supporting means are disposed intermittently in a longitudinal direction of the coating bar, each of the supporting means having pairs of rollers rotatably provided at the upstream side and downstream side in a conveying direction of the web. Such pairs of rotatable rollers support the coating bar circumscribed thereby, so that the frictional resistance between the coating bar and the supporting means are reduced to suppress abrasion and deformation of the supporting means. However, even such a coating device might have faults of application missing caused by air bubbles which are entrained at a contact section between the rotatable support and the coating bar leaving thin coating fluid on the surface so that the air bubbles are applied together with the coating fluid to the web and then burst.

To prevent such faults, Patent documents 3 and 4 disclose devices in which a container to house a rotatable support for a coating bar is filled with coating fluid. The coating fluid supplied in the container flows out of gap between the coating bar surface and the upstream/downstream cover tip of the upper part of the container. The coating bar is provided near the coating fluid level in the container and is rotated to perform a coating with the coating fluid dipped from the container. These devices don't tend to entrain air bubbles because the contact section between the rotatable support and the coating bar is located in the coating fluid.

However, as disclosed in Patent documents 3 and 4, these devices might entrain air bubbles when the fluid level is heaved by accompanying flow generated by the rotated support in the container. Thus generated air bubbles and the coating fluid might flow in the container to be dipped with the coating bar and applied to the web to cause the same faults of application missing as Patent document 2.

To solve the above-described problem, Patent documents 3 and 4 disclose technologies for suppressing the heaved fluid level caused by the accompanying flow. Patent document 3 discloses an elastic blade provided close to the fluid level. The accompanying flow generated by the rotating support is dammed with the elastic blade before arriving at the fluid surface to suppress the fluctuation of fluid level. Patent document 4 discloses a weir provided close to the coating bar above the rotating support. The weir can dam the accompanying flow to suppress the fluctuation of fluid level.

### Prior art documents

### Patent documents

Patent document 1: JP2003-275643-A
Patent document 2: JPH02-45174-U
Patent document 3: JP2010-75777-A
Patent document 4: JP2008-238082-A

### Summary of the Invention

### Problems to be solved by the Invention

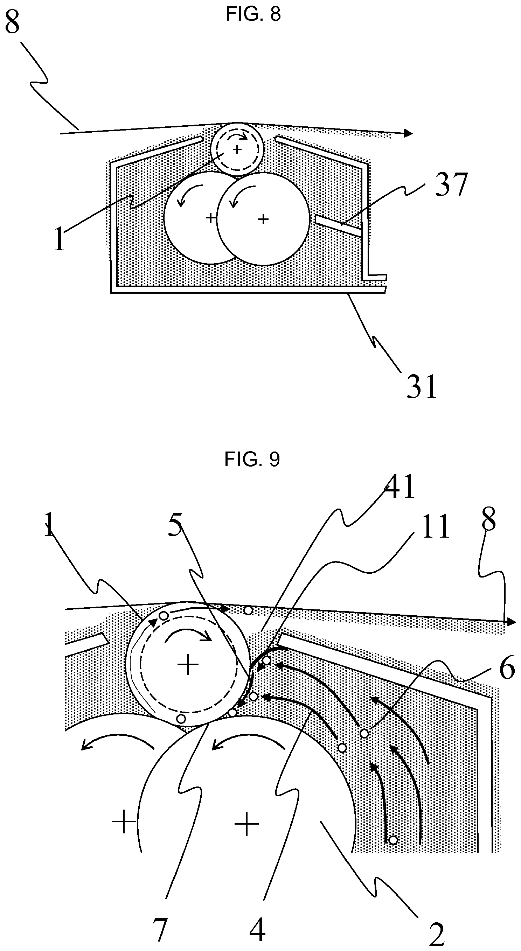

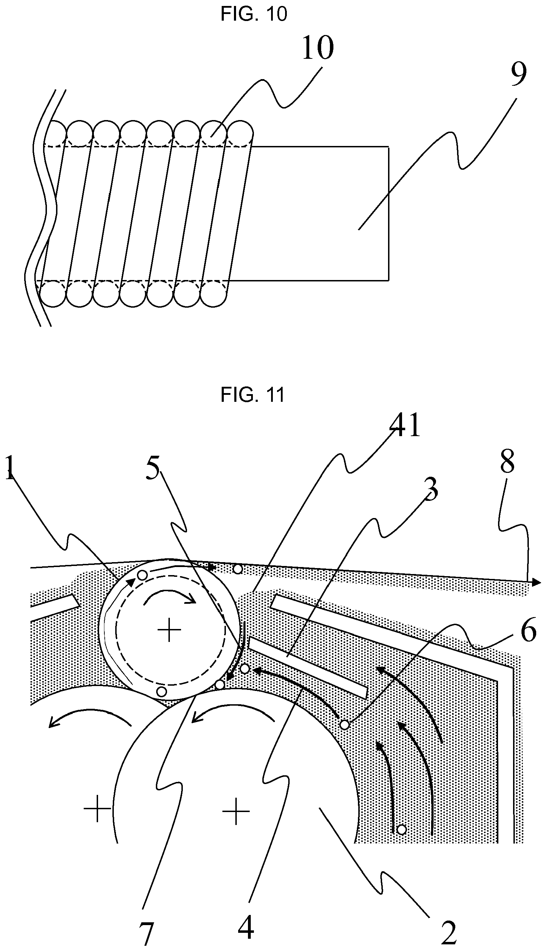

However, even with the elastic blade disclosed in Patent document 3, the faults of application missing might be generated when the coating fluid supplied in the container entrains air bubbles. This problem will be explained with reference to Fig. 9 and Fig. 10. Figure 10 is a schematic diagram showing the coating bar surface. As shown in Fig. 10, the coating bar has grooves on the surface formed by rolling up wire 10 around rod 9. Figure 9 is an enlarged view showing neighborhood of the coating bar in Patent document 3. Coating bar 1 supported by support 2 is driven to rotate as pushed onto web 8 conveyed. Support 2 is driven to rotate with coating bar 1 to generate accompanying flow 4. Accompanying flow 4 is dammed by elastic blade 11 so that pulsation of fluid level 41 is suppressed. However elastic blade 11 doesn't prevent the accompanying flow itself and therefore air bubbles 6 in the coating fluid are led to the neighborhood of surface of coating bar 1 by accompanying flow 4 of support 2 as shown in Fig. 9. Air bubbles 6 are entrained by accompanying flow 5 of the coating bar to be trapped at tangent point 7 with grooves of coating bar 1. Such trapped air bubbles 6 are delivered to the web surface by rotating coating bar 1 and apply the web surface. As a result, the web might have faults of application missing. Although air bubbles 6 may arrive at the bottom face of elastic blade 11 by accompanying flow 4, the web might have faults of application missing as well because the bubbles could stay at the bottom face of the elastic blade and be entrained by accompanying flow 5 of the coating bar.

Even with the weir disclosed in Patent document 4, the faults of application missing might be generated like the technology of Patent document 3 when the coating fluid supplied in the container entrains air bubbles. This problem will be explained with reference to Fig. 11. Figure 11 is an enlarged view showing neighborhood of the coating bar in Patent document 4. Coating bar 1 supported by support 2 is driven to rotate as pushed onto web 8 conveyed. Accompanying flow 4 is dammed by weir 3 so that pulsation of fluid level 41 is suppressed. However weir 3 doesn't prevent the accompanying flow itself and therefore air bubbles 6 in the coating fluid are led between weir 3 and support 2 to reach the neighborhood of surface of coating bar 1 by accompanying flow 4 of support 2, as shown in Fig. 11. Then air bubbles 6 are entrained by accompanying flow 5 of the coating bar to be trapped at tangent point 7 with grooves of coating bar 1. After that, the web might have faults of application missing for the same reason as Patent document 3.

Accordingly, the present invention provides a coating device and a coating method capable of preventing air bubbles from being entrained or accompanied at the coating section to suppress causing the application faults derived from the air bubbles.

### Means for solving the Problems

To achieve the above-described object, our coating device has a configuration as in claim 1.

The "upstream" of the coating device means an upstream side from which the web is conveyed in a conveyor line of the coating device. The "downstream" of the coating device means a downstream side to which the web is conveyed in a conveyor line of the coating device.

To achieve the above-described object, our coating method has a configuration as follows.

A coating method using the above-described coating device, comprising: supplying the coating fluid to the container from the coating fluid inlet; immersing the coating bar in the coating fluid; pushing the coating bar onto the web conveyed at a predetermined velocity from an upstream side to the downstream side; and applying the coating fluid dipped with the coating bar to the web.

To achieve the above-described object, our method for producing a resin film having a coating film has a configuration as follows. A method for producing a resin film having a coating film, comprising: extruding a polymer with an extruder; forming a sheet of the resin film from the extruded polymer; and applying the coating fluid to the resin film to form the coating film by the above-described coating method.

Another embodiment of our method for producing a resin film having a coating film has a configuration as follows. A method for producing a resin film having a coating film, comprising: unwinding the resin film with an unwinder; applying the coating fluid to the unwound resin film to form the coating film by the above-described coating method; and rolling up the resin film having the coating film with a take-up machine.

### Effect according to the Invention

Our coating device and coating method can suppress causing application faults derived from air bubbles by discharging air bubbles together with coating fluid leaking out of the coating device as preventing the air bubbles from being taken by the coating bar even when the air bubbles are entrained by the coating fluid filling the coating device.

Further, our desirable coating device and coating method can effectively prevent the fluid level from pulsating so that air bubbles are prevented from being entrained at the coating section to suppress causing the application faults derived from the air bubbles.

### Brief explanation of the drawings

[Fig. 1] Fig. 1 is a schematic section view showing an example of our invention.
[Fig. 2] Fig. 2 is a plan view corresponding to Fig. 1 viewed from Z-direction.
[Fig. 3] Fig. 3 is an enlarged view corresponding to Fig. 1.
[Fig. 4] Fig. 4 is a side view corresponding to Fig. 2 viewed from W-direction.
[Fig. 5] Fig. 5 is a schematic section view showing another example of our invention.
[Fig. 6] Fig. 6 is an enlarged view of Fig. 1.
[Fig. 7] Fig. 7 is an enlarged view of neighborhood of coating bar showing an example in which line L2 intersects the coating bar.
[Fig. 8] Fig. 8 is a schematic section view showing yet another example of our invention.
[Fig. 9] Fig. 9 is an enlarged view of neighborhood of coating bar showing the coating device in Patent document 3.
[Fig. 10] Fig. 10 is a schematic view showing a coating bar surface.
[Fig. 11] Fig. 11 is an enlarged view of neighborhood of coating bar showing the coating device in Patent document 4.
[Fig. 12] Fig. 12 is a schematic view showing an example of manufacturing process of web.
[Fig. 13] Fig. 13 is a schematic view showing a flowchart of in-line coating in the manufacturing process of web shown in Fig. 12.
[Fig. 14] Fig. 14 is a schematic section view showing yet another example of our invention.

### Embodiments for carrying out the Invention

Hereinafter, examples of our invention will be explained with reference to the figures.

### [Coating device, coating method]

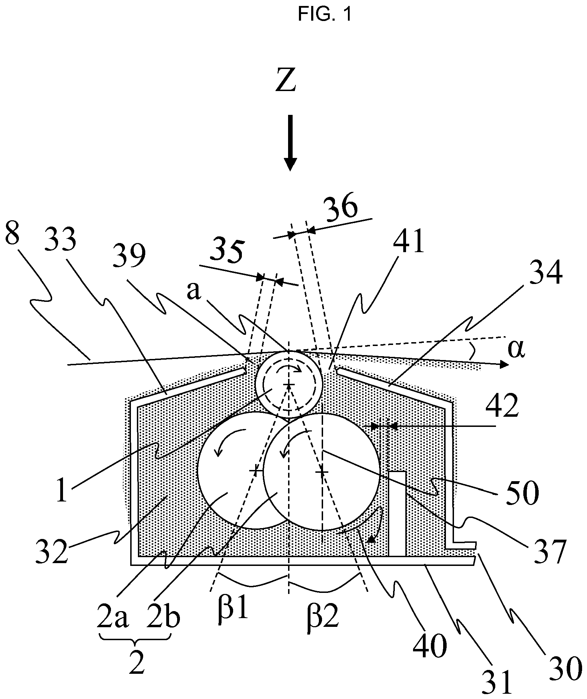

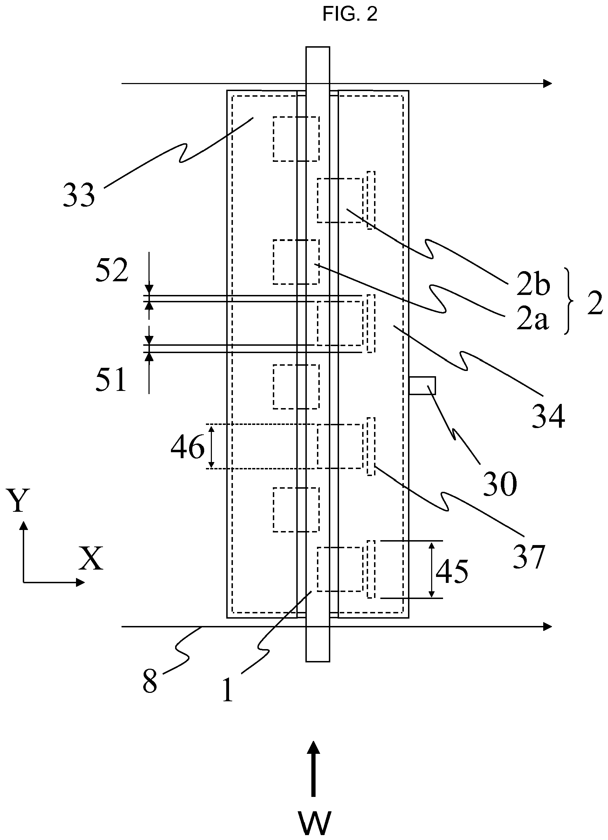

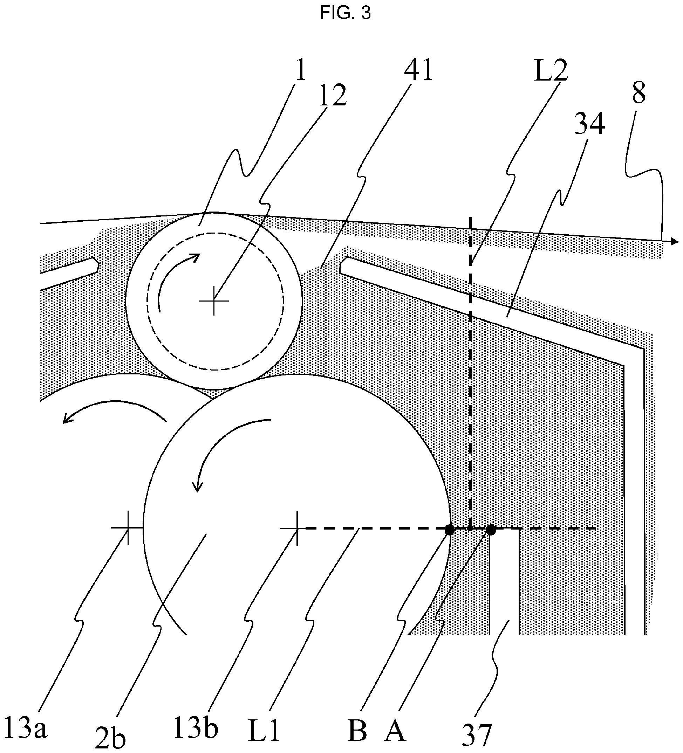

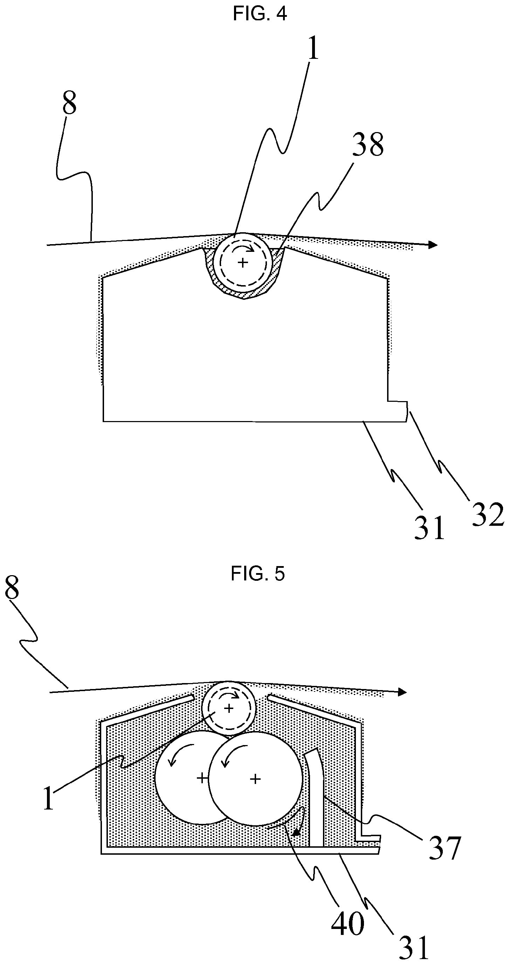

First the device configuration of an example will be explained. Figure 1 is a schematic section view showing an example of our invention. Figure 2 is a plan view corresponding to Fig. 1 viewed from Z-direction. Figure 3 is an enlarged view corresponding to Fig. 1. Figure 4 is a side view corresponding to Fig. 2 viewed from W-direction.

As shown in Fig. 1, our coating device comprises container 31 having coating-fluid inlet 30, coating bar 1 immersed in coating fluid 32, and rotatable support 2 to support coating bar 1. Support 2 consists of support 2a and support 2b where support 2a has shaft center 13a at upstream side relative to shaft center 12 of coating bar 1 in conveyance direction of web 8 and supports coating bar 1 from the bottom at the upstream side while support 2b has shaft center 13b at downstream side relative to shaft center 12 of coating bar 1 in conveyance direction of web 8 and supports coating bar 1 from the bottom at the downstream side, as shown in Fig. 3 indicating symbols 12, 13a and 13b. Container 31 is provided with a top portion consisting of upstream upper end 33 and downstream upper end 34 which are located respectively at the upstream and downstream sides of conveyance direction (shown with arrowhead on the end of web 8 in Fig. 1) of web 8 relative to coating bar 1. Upstream upper end 33 and downstream upper end 34 are designed to form an opening of which longitudinal direction corresponds to the longitudinal direction (Y-direction of coordinate axis shown in Fig. 2) of container 31. In the opening, coating bar 1 is provided with the rotational axis parallel to the longitudinal direction (Y-direction of coordinate axis shown in Fig. 2) of the opening. Upstream upper end 33 and coating bar 1 are designed to form first gap 35 while downstream upper end 34 and coating bar 1 are designed to form second gap 36. Weir 37 is provided on the bottom of container 31 as being close to the outer periphery of support 2b.

Coating bar 1 is supported rotatably at both ends by bearings or the like (not shown). As shown in Fig. 2, coating bar 1 is supported from below by a plurality of rotatable supports 2 which is circumscribed by the coating bar and is disposed intermittently along the longitudinal direction of coating bar 1. Coating bar 1 is pushed onto web 8 conveyed at a predetermined velocity from upstream side to downstream side and is driven to rotate while support 2 supporting coating bar 1 is driven by coating bar 1 to rotate.

Next, the flow of coating fluid will be explained. As shown in Fig. 1, coating fluid 32 is supplied by a coating fluid supply means (not shown) from coating fluid inlet 30 to fill the container while some portion dipped with coating bar 1 is applied to web 8. Remaining coating fluid 32 leaks sequentially out of the container through first gap 35, second gap 36, gap 38 (shaded portion shown in Fig. 4) between the container side face and coating bar 1, or the like.

It is preferable that the coating fluid supply means is a metering pump having low pulsation, such as gear pump, diaphragm pump and Mohno pump. It is possible that the coating fluid discharged from the pump is supplied to the container with a filter or a defoaming means. The coating fluid may be supplied through some inlets of the container.

It is preferable that first gap 35 and second gap 36 (both shown in Fig. 1) as well as gap 38 (shown in Fig. 4) between the container side face and coating bar 1 have a smaller size. It is preferable that first gap 35 has a width of 3mm or less while second gap 36 has a width of 2mm or less.

### [Weir]

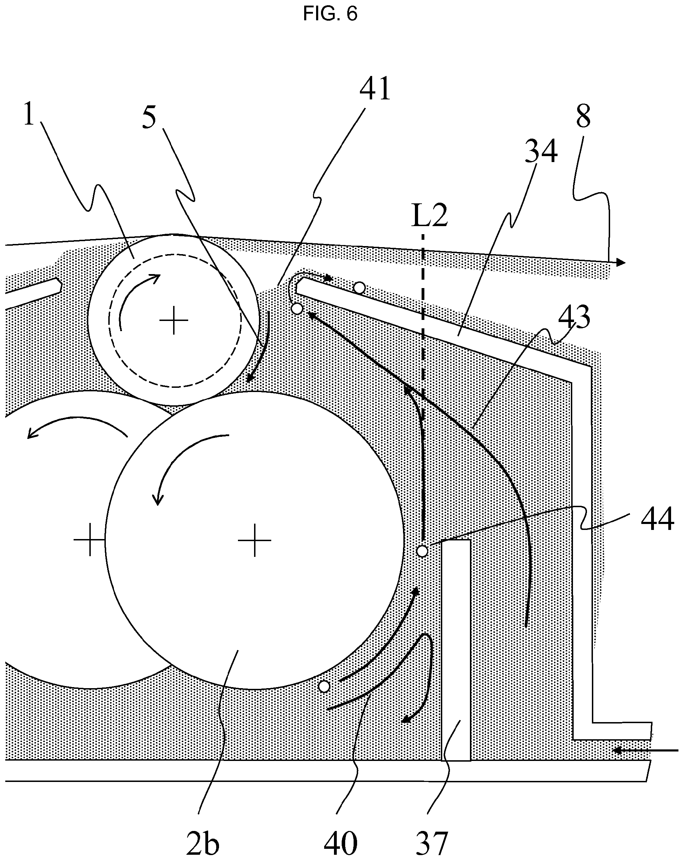

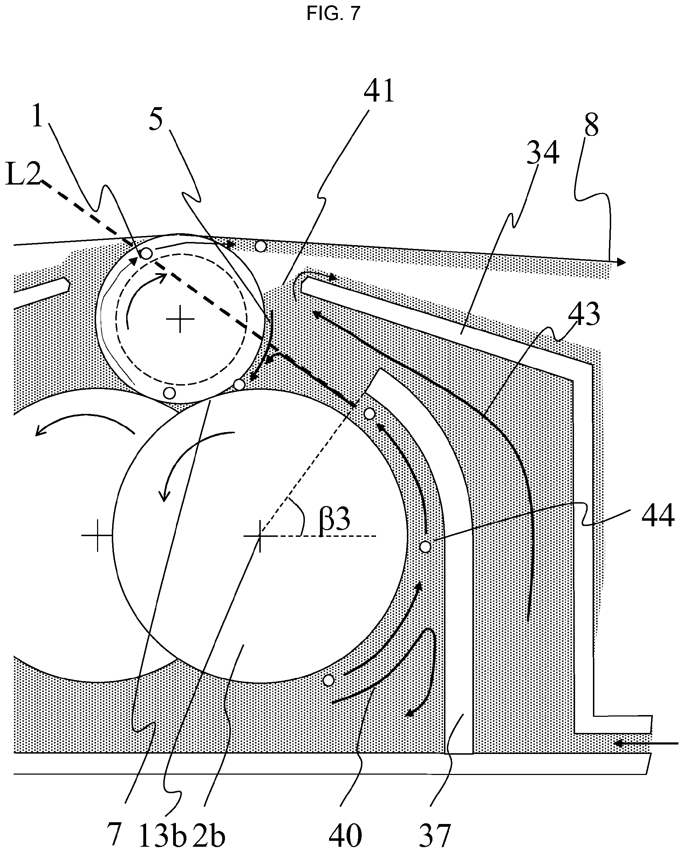

As shown in Fig. 5, weir 37 may be provided along the outer periphery of support 2b. As shown in Fig. 3, it is preferable that weir 37 is provided not to make line L2 intersect the coating bar, wherein line L1 is defined as a line tangent to weir 37 as extending from shaft center 13b of support 2b, point A is defined as a point closest to the shaft center of support 2b among tangent points of L1 and weir 37, point B is defined as an intersection of L1 and outer periphery of support 2b, and line L2 is defined as a line which passes through the midpoint between points A and B and is perpendicular to line L1 and axis of support 2b. Line L1 contacts weir 37 when a line extending from shaft center 13b of support 2b upward in the vertical direction is gradually inclined as fixing the pivot point of shaft center 13b. That configuration can prevent air bubbles entrained in the coating fluid from being applied to web 8. Details of the configuration will be explained with reference to Fig. 6 and Fig. 7.

Figure 6 is an enlarged view corresponding to Fig. 1. Figure 7 is an enlarged view of neighborhood of coating bar showing an example in which line L2 intersects the coating bar. As shown in Fig. 6, air bubbles 44 released from an end of flow path formed between weir 37 and support 2b flow in the container to get out of the device through fluid level 41 without being trapped by grooves of coating bar 1. However, air bubbles 44 released from the end of flow path formed between weir 37 and support 2b flow toward coating bar 1 are entrained by accompanying flow 5 to be trapped at tangent point 7 with grooves of coating bar 1. Thus trapped air bubbles 44 are driven by rotating coating bar 1 to reach the coating surface to be applied to the web surface. As a result, the web might have faults of application missing.

It is preferable that a gap between weir 37 and outer periphery of support 2b has a width of 2mm or less, at least in a part at downstream side in the conveyance direction of web 8 relative to vertical line 50 (shown in Fig. 1) passing through shaft center 13b of support 2b. The phrase "downstream side relative to vertical line 50" includes vertical line 50 itself. When abrasion scraps of weir 37 contaminating the coating film are not so harmful for the use of products, weir 37 may be provided as contacting support 2b. With such a configuration, accompanying flow 40 generated by rotating support 2b can be dammed with weir 37 to prevent pulsation of fluid level 41 as shown in Fig. 1. Besides, too broad gap might be less advantageous for damming the accompanying flow. Also, when there is no position having a gap width of 2mm or less at downstream side in the conveyance direction but upstream side in the conveyance direction of web 8, accompanying flow might be regenerated on the outer periphery of support 2b at downstream side relative to vertical line 50 so that fluid level 41 pulsates. On the other hand, it is possible that there is a position having a gap width of 2mm or less at upstream side so far as there is a position having a gap of which width is 2mm or less between weir 37 and the outer periphery of support 2b at downstream side relative to vertical line 50. Not to make weir 37 contact support 2b, it is preferable that the gap is 0.1mm or more. The gap of 0.1mm or more can prevent weir 37 from contacting support 2b even if the surface layer of support 2b made of rubber or the like swells with the coating fluid.

Weir 37 may be provided close to any one of a plurality of supports 2b disposed along the web width direction. End portions in the width direction of web may not be used to make final products and therefore faults of application missing could be harmless in such portions. In such a case, it is possible that weirs 37 are only provided close to supports 2b to be used for final products. It is preferable that weirs 37 are provided close to all supports 2b. With such a configuration, the faults of application missing caused by air entrainment can be prevented all over the full width of film.

Weir 37 may be provided on the side face of container 31 as shown in Fig. 8. In this case, to prevent air bubbles and coating fluid from staying at the bottom of weir 37, it is preferable that the bottom face of weir 37 is inclined upward from the level toward the support from the side face of container 31.

It is possible that weir 37 is integrated with container 31 or downstream upper end 34 of the coating device, or is removably fixed with bolts. Such an integrated weir 37 may be attached to container 31 by welding or the like, or may be formed together with container 37 by cutting a single material. It is possible that a gap between weir 37 and the support is formed as adjustable.

As shown in Fig. 2, it is possible that weirs 37 are provided intermittently along the width direction of web 8 or are provided continuously along the width direction of web 8 by connecting weirs 37 shown in Fig. 2. In a case of intermittent configuration shown in Fig. 2, it is preferable that weir 37 has web-width directional length 45 longer than web-width directional length 46 of support 2b so that accompanying flow generated by support 2b is surely dammed.

It is possible that weir 37 is provided close to support 2a. The accompanying flow to cause pulsation of fluid level 41 may be often generated by support 2b at the downstream side in the film conveyance direction, and therefore weir 37 provided close to support 2b would be effective. To minimize the pulsation of fluid level 41, weir 37 can be provided even close to support 2a positioned at the upstream side in the film conveyance direction. Further, weir 37 may be provided close to support 2a like the case in which it is provided close to support 2b.

### [Coating bar]

Coating bar 1 may be a rod, a wire bar having grooves formed by winding a wire on the outer periphery of the rod, a thread-rolling rod having grooves formed on the rod outer periphery by a thread-rolling process, or the like. It is preferable that coating bar 1 is made of stainless steel such as SUS304 and SUS316 in particular. It is possible that a surface treatment such as hard chrome plating is performed on the surface of coating bar 1. It is preferable that coating bar 1 has a diameter of 10 to 20mm since a streak of application fault called "rib streak" in the conveyance direction might be caused above the preferable range while coating bar might have a greater bend below the preferable range. In this example, coating bar 1 is pushed onto web 8 to be driven by frictional force on web 8 to rotate in a manner of so-called "driven rotation". It is possible that coating bar 1 is driven to rotate by a driving device such as motor. When it is rotated by a driving device, it is preferable that the coating bar rotates at the practically-same speed as the web conveyance speed, in order to prevent the web from having a scratch. Said "practically-same speed" is defined as having a speed difference within ±10% between the circumferential speed of coating bar and conveyance speed of web. When scratches on the web are not so harmful for the use of products, the coating bar may be rotated at a speed different from the web conveyance speed or may be rotated reversely to the web conveyance direction. It is preferable that winding angle α is 2 to 10°, since band-shaped variational application faults might be caused by fluttering or vibrating web below the preferable range while coating bar 1 might bend greatly or support 2 might be abraded because of increased load to coating bar 1 or support 2 above the preferable range.

### [Support]

Support 2 may be roller, ball or the like, which supports the coating bar as rotating. To reduce abrasion of coating bar 1, it is preferable that a surface layer of support 2 is made of a material having a hardness lower than coating bar 1. It is preferable that the surface layer is made of synthetic rubber or elastomer. The elastomer is a rubberlike elastic resin capable of being melt-molded by a molding method such as injection molding method, extrusion method, cast molding method, blow molding method, inflation molding method or the like. It is preferable that the elastomer is urethane elastomer, polyester elastomer or polyamide elastomer, preferably thermoplastic polyurethane elastomer excellent in abrasion resistance and mechanical strength. It is preferable that the elastomer constituting the surface layer of support 2 has a thickness of 0.5 to 6mm. It is preferable that the elastomer has a hardness of 60 to 98A determined according to JIS K6253:1996.

To stably support coating bar 1, it is preferable that supports 2 are provided at both upstream and downstream sides of coating bar 1 in the conveyance direction of web 8. It is possible that supports 2 are slightly displaced in the longitudinal direction of coating bar 1 to prevent supports 2 facing to each other from interfering to each other. It is preferable that angles β1 and β2 are 10° or more, wherein
angle β1 (shown in Fig. 1) is defined as an angle made by the vertical line and a line between shaft center 12 of coating bar 1 and shaft center 13a of support 2a provided upstream of coating bar 1 in the conveyance direction of web 8 while angle β2 (shown in Fig. 1) is defined as an angle made by the vertical line and a line between shaft center 12 of coating bar 1 and shaft center 13a of support 2b provided downstream of coating bar 1 in the conveyance direction of web 8. When angles β1 and β2 are too small, coating bar 1 might vibrate by vibrating web 8 to cause an application fault.

It is preferable that support 2 is configured to have a bearing for a smooth rotation in case that vibration or unevenness of rotation of support 2 might be transmitted to coating bar 1 to cause application faults. It is preferable that support 2 to be immersed in the coating fluid is made of a material which is corrosion-resistant to the coating fluid and preferably waterproof. It is preferable that support 2 has a diameter of 8mm or more so that commercially-available bearings can be used. It is preferable that support 2 has a length of 3 to 25mm in axial direction so that accompanying flow is less generated and general bearings can be used.

Supports 2 should be disposed at a smaller interval along the longitudinal direction of coating bar 1 because too wide interval might cause too much bending of coating bar 1. It is preferable that a bending of coating bar 1 is 10µm or less. The amount of bending should be determined by an equation of material mechanics from the second moment of area and Young's modulus, wherein support 2 is regarded as a support point while the out-of-plane directional reactive force of web 8 calculated from tension which is applied to web 8 in the moving direction and winding angle α of web 8 is regarded as a uniformly-distributed load applied to coating bar 1.

Support 37 may be made of a metal such as iron, stainless steel, aluminum and copper, a synthetic resin such as nylon, acrylic acid resin, vinyl resin chloride and ethylene tetrafluoride, rubber or the like. It may be shaped like a plate or block.

### [Upstream upper end, downstream upper end]

It is preferable that at least a part of upstream upper end 33 is inclined by 10° to 90° downward from the level with increasing distance from the opening side toward the upstream side. It is preferable that at least a part of downstream upper end 34 is inclined by 10° to 90° downward from the level with increasing distance from the opening side toward the downstream side. Such a configuration can prevent the coating fluid from deteriorating on the top face of upstream upper end 33 and downstream upper end 34 where the coating fluid stays after being leaked through first gap 35 and second gap. The configuration can also prevent uneven application from being caused by disturbed bead 39 at upstream side of coating bar.

### [Coating fluid]

It is preferable that the coating fluid has a viscosity of 0.1Pa·s or less. The viscosity of coating fluid above the preferable range might have a streak of coating fluid to be dipped with the coating bar in the container to cause a streak of ununiform application in the web width direction. The viscosity is determined according to JIS Z8803:1996. As a measuring device, rheometer (RC20 made by Rheotech Corporation) may be used. Although it would be ideal that the temperature of coating fluid as a measurement condition is actually measured at the application section, it is difficult to measure the coating fluid temperature exactly at the application section. Accordingly, the coating fluid temperature can be measured in a coating fluid supply means (not shown) such as liquid feed tank instead. It is preferable that the coating bar rotates at a circumferential speed of 150m/min or less. The circumferential rotation speed above the preferable range might cause a streak of application.

It is preferable that the coating fluid is applied by 2 to 100g/m² in a wet condition right after application, and preferably by 4 to 50g/m². The application amount can be adjusted by changing the size of groove formed on the coating bar. The size of groove can be changed by changing diameter of the wire to be wound when the coating bar is a wire bar. The size of groove can be changed by performing a thread-rolling process with a die having different groove depth and/or groove pitch when the coating bar is a thread-rolling rod.

### [Manufacturing method of resin film with coating film]

The application may be performed either in line to a web forming film or off line to a manufactured web.

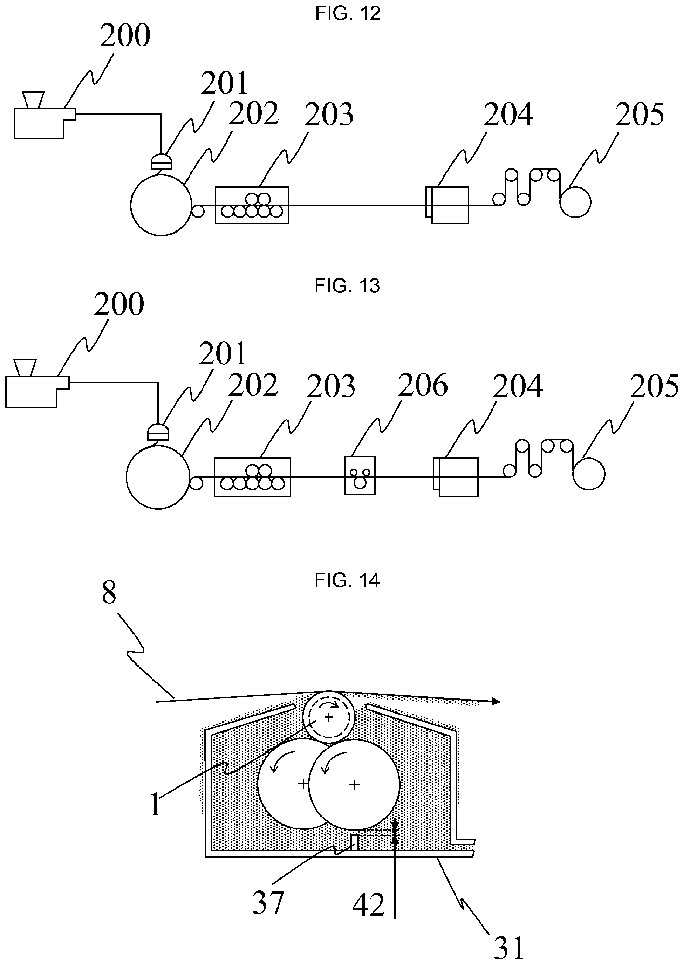

The device configuration for manufacturing resin films with in-line application performed to a web being manufactured will be explained with reference to Fig. 12 and Fig. 13. Figure 12 is a schematic view showing an example of manufacturing process of resin film. Figure 13 is a schematic view showing a flowchart of in-line coating in the manufacturing process of resin film shown in Fig. 12. The flowchart of manufacturing process of resin film shown in Fig. 12 has extruder 200, die 201, casting drum 202, longitudinal stretching machine 203, transverse stretching machine 204 and take-up roll 205. A polymer is extruded with extruder 200 and is formed in a sheet-like shape through die 201 and casting drum 202. Thus formed resin film is stretched longitudinally and transversely with longitudinal stretching machine 203 and transverse stretching machine 204. Thus stretched resin film is rolled up with take-up roll 205 continuously. When the application is performed in line to a web being manufactured, coating device 206 may be provided between longitudinal stretching machine 203 and transverse stretching machine 204 to perform application to resin film stretched longitudinally, as shown in Fig. 13. Although the above-described explanation is about sequential biaxial stretching method to longitudinally stretch and then transversely stretch, our coating device may be provided before a simultaneous biaxial stretching machine.

When the application is performed off line to a manufactured resin film, a taken-up resin film is once unwound with an unwinder and then the application to the resin film is performed as being rolled up again with a take-up machine provided.

### [Examples]

Hereinafter, our invention will be explained according to Examples, which don't limit our invention.

### [Example 1]

A chip of PolyEthylene Terephthalate (may be abbreviated as PET) having a limiting viscosity (may be called intrinsic viscosity) of 0.62dl/g (determined in o-chlorophenol at 25°C according to JIS K7367:1996) was vacuum-dried sufficiently at 180°C. The vacuum-dried chip was supplied to extruder 200 in Fig. 13 and melted at 285°C. The melted polymer was extruded into a sheet from T-shaped die 201 and was cooled and solidified to make a unstretched film by the electrostatic casting method on a mirror-finished casting drum 202 of which surface temperature was 23°C. Then the unstretched film was heated with a group of rolls heated to 80°C and was stretched longitudinally by 3.2 times with longitudinal stretching machine 203 as being further heated with an infrared heater, and was cooled with a cooling roll regulated at 50°C to make a uniaxially stretched resin film. The resin film had width of 1,700mm. Coating fluid 32 was applied to the bottom face of the resin film being fed at 70m/min with coating device 206 shown in Fig. 1. Successively, the resin film coated with coating fluid 32 was heated in an oven at 90°C and then dried in another oven at 100°C while the resin film was stretched transversely by 3.7 times with transverse stretching machine, and was relaxed transversely by 5% in another oven at 220°C to be heat set. Thus a biaxially-stretched film provided with film of coating fluid 32 on one side was prepared. Tensions of longitudinal stretching machine 203 and transverse stretching machine 204 were controlled with a dancer roll to have a tension of 8,000N/m per unit width applied to the resin film in the feeding direction.

Coating fluid 32 was a mixed liquid containing: 1 parts by mass of colloidal silica particles having average particle diameter of 0.1 µm; 5 parts by mass of melamine-based cross-linker (imino group-type methylated melamine diluted with mixed solvent of 10 mass% of isopropyl alcohol and 90 mass% of water); and 100 parts by mass of emulsion of polyester copolymer (Components: 90mol% of terephthalic acid, 10mol% of 5-sodium sulfoisophthalic acid, 96mol% of ethylene glycol, 3mol% of neopentylglycol, 1mol% of diethylene glycol). Coating fluid 32 had viscosity of 2mPa·s at 25°C.

This coating fluid was supplied to container 31 at 17kg/min with a diaphragm pump (made by TACMINA Corporation). As shown in Fig. 1 and Fig. 2, container 31 was provided with each coating fluid inlet 30. Coating bar 1 (made by Kanoshoji Co., Ltd.) was prepared by winding a wire having diameter of 0.1mm around a stainless steel round bar having diameter of 12.7mm and length of 1,850mm. Support 2 was a roller which had diameter of 22mm and axial length of 14mm as well as 2mm thickness of thermoplastic polyurethane elastomer having hardness of 95A applied to the surface. Eight pieces of supports 2 were disposed by 470mm pitch along the longitudinal direction of coating bar 1. They were disposed in zigzag arrangement at upstream and downstream sides of coating bar in the resin film conveyance direction. Angles β1 and β2 shown in Fig. 1 were set to 15°. Support 2 was configured to rotate freely in the circumferential direction while restricting its movement in the axial and vertical directions. Coating bar 1, which was supported with support 2 and the bearing on both ends as circumferentially rotatable, was pushed onto a resin film being horizontally conveyed to make winding angle α of 10° so that it was driven to rotate in the same direction as the resin film conveyance direction. First gap 35 was 3mm while second gap 36 was 2mm. The coating fluid was leaked through first gap 35 and second gap 36, in addition to gap 38 (shown in Fig. 4) between the container side face and coating bar having a cross section of 55mm² according to the drawing. Upstream upper end 33 and downstream upper end 34 were acrylic boards having thickness of 1mm. Upstream upper end 33 was installed to be inclined downward by 15° from the horizontal direction with increasing distance from the opening side toward the upstream side. Downstream upper end 34 was installed to be inclined downward by 15° from the horizontal direction with increasing distance from the opening side toward the downstream side.

Weir 37 was a plate made of SUS304. As shown in Fig. 1, weirs 37 were installed to have gap 42 of 3mm at the downstream side of film conveyance direction of support 2b. Weirs 37 were installed intermittently in the film width direction as shown in Fig. 2 to have the same height as shaft center 13b of support 2b as shown in Fig. 3. Weirs 37 were installed to have 5mm of film conveyance directional length, 20mm of film width directional length (indicated as 45 in Fig. 2) and 3mm of protrusions (indicated as 51 and 52 in Fig. 2) from both end faces in the axial direction of support 2b.

A sample of the resin film which had been stretched after application with a transverse stretching machine to 5,735±70mm and cut into a piece of 3m of the conveyance directional length was illuminated with a three band fluorescent lamp and was visually observed in a darkroom for evaluation of fault of application missing. The fault of application missing can be observed as an oval shape of fault (major axis diameter: 1-10mm, minor axis diameter: 0.3-3mm) caused by spherical air bubbles which were applied to a resin film with coating fluid to burst, and were transversely stretched. Because this part has a thin coating thickness, it can also be observed as uneven coloring under a three band fluorescent lamp. The number of faults of application missing on the sample was counted to calculate the number per 1m². The fault of 5 units/m² or less is sufficient for products although it should be fewer. Further, downstream upper end 34 was lit with a flashlight during application process to observe the presence of pulsation of fluid level 41 at downstream side in the conveyance direction of resin film.

No pulsation of fluid level 41 at downstream side in the conveyance direction of resin film was observed after application by the coating device. The number of faults of application missing was only 3.8 units/m² of sufficient quality for products.

### [Example 2]

The application was performed by the same way as Example 1, except that gap 42 between the weir and support was 2mm. As a result, no pulsation of fluid level 41 at downstream side in the conveyance direction of resin film was observed. The number of faults of application missing was only 1.7 units/m² of sufficient quality for products.

### [Example 3]

The application was performed by the same way as Example 1, except that weir 37 was provided right below support 2b as shown in Fig. 14 and that gap 42 between the weir and support was 2mm. As a result, no pulsation of fluid level 41 at downstream side in the conveyance direction of resin film was observed. The number of faults of application missing was only 4.7 units/m² of sufficient quality for products.

### [Example 4]

The application was performed by the same way as Example 1, except that weirs 37 were installed at the downstream side of film conveyance direction of support 2a instead of support 2b. As a result, although some pulsation of fluid level 41 at downstream side in the conveyance direction of resin film was observed in comparison with Example 1, the number of faults of application missing was only 4.5 units/m² of sufficient quality for products.

### [Example 5]

The application was performed by the same way as Example 1, except that weirs on both ends in the film width direction were removed. As a result, some pulsation of fluid level 41 at downstream side in the conveyance direction of resin film was observed at rollers of both ends on which weirs had been removed. As a result of inspecting the sample, although the number of faults of application missing at both ends of 115mm as a part of the sample having full width of 5,375mm was up to 18.3 units/m², the number at the parts except for the both ends of 115mm was only 4.0 units/m² of sufficient quality for products.

### [Comparative Example 1]

The application was performed by the same way as Example 1, except that weirs shown in Fig. 7 were installed. These weirs were made by adding an approaching part along the outer periphery of support 2b within angle β3 rotated in the rotational direction of support 2b from the horizontal line passing through shaft center 13b of support 2b to the weir of Example 1. Angle β3 was 45° and the gap between the support and weir was 2mm in the section of angle β3. As a result, although no pulsation of fluid level 41 at downstream side in the conveyance direction of resin film was observed, the number of faults of application missing was up to 7.0 units/m² of insufficient quality for products.

### [Comparative Example 2]

The application was performed by the same way as Example 1, except that weirs 37 were not installed and elastic blades disclosed in Patent document 3 were installed as shown in Fig. 9. One end of elastic blade 11 made of polyethylene film having thickness of 0.1mm was fixed to the bottom face of downstream upper end 34 to protrude from the tip of downstream upper end 34 toward coating bar 1. The protrusion had length (length in a direction perpendicular to the longitudinal direction of coating bar) of 3mm while the other end of elastic blade was pushed onto coating bar 1 to contact the top face of the elastic blade with coating bar 1 as shown in Fig. 9. The elastic blade had the same length in the film width direction as the inside dimension of container in film width direction so that it was installed as extending all over the full width of container.

As a result of application using the device, although no pulsation of fluid level 41 at downstream side in the conveyance direction of resin film was observed, the number of faults of application missing on the applied sample was observed by up to 8.0 units/m² of insufficient quality for products.

### [Comparative Example 3]

The application was performed by the same way as Example 1, except that weirs 37 were not installed and weirs disclosed in Patent document 4 were installed as shown in Fig. 11. Weir 3 had gap of 1mm between coating bar 1 and tip of weir 3, inclination angle of 15° from the horizontal line, and shortest distance of 3mm between the outer periphery of support 2 and surface of weir 3. Weir 3 made of stainless steel plate having thickness of 0.5mm was installed to extend all over the full width of container in the longitudinal direction.

As a result of application with the device, although no pulsation of fluid level 41 at downstream side in the conveyance direction of resin film was observed, the number of faults of application missing on the applied sample was observed by up to 8.3 units/m² of insufficient quality for products.

### [Comparative Example 4]

The application was performed by the same way as Example 1, except that weirs 37 were not installed. As a result of application using the device, pulsation of fluid level 41 at downstream side in the conveyance direction of resin film was observed in comparison with Example 1 while the number of faults of application missing of the applied sample was observed by up to 19.1 units/m² of insufficient quality for products.

### Explanation of symbols

1: coating bar
2: support
2a: upstream upper end support
2b: downstream upper end support
3: weir
4: accompanying flow
5: accompanying flow of coating bar
6: air bubble
7: tangent point of coating bar and support
8: web
9: rod
10: wire
11: elastic blade
12: shaft center of coating bar
13: shaft center of support
13a: shaft center of upstream support
13b: shaft center of downstream support
30: coating fluid inlet
31: container
32: coating fluid
33: upstream upper end
34: downstream upper end
35: first gap
36: second gap
37: weir
38: gap between container side and coating bar
39: bead
40: accompanying flow
41: fluid level
42: gap between weir and support
43: coating fluid flow
44: air bubble
45: web width directional length of weir
46: web width directional length of support
50: vertical line
51: difference between support and weir lengths
52: difference between support and weir lengths
200: extruder
201: die
202: casting drum
203: longitudinal stretching machine
204: transverse stretching machine
205: take-up roll
206: coating device
a: tangent point of web and coating bar
A: tangent point of L1 and weir
B: tangent point of L1 and support outer periphery
L1: line between weir terminal and support shaft center
L2: line drawn from midpoint between tangent points A and B to be perpendicular to L1
α: winding angle
β1: support installation angle
β2: support installation angle
β3: angle made by horizontal line and line between weir tip and shaft center

## Claims

1. A coating device (206) comprising: a container (31) having a coating fluid inlet (30);
an upstream upper end (33) and a downstream upper end (34) provided at a top of the container (31) forming an opening of which longitudinal direction corresponds to a longitudinal direction of the container (31);
a rotatable coating bar (1) which is provided in the opening between a tip of the upstream upper end (33) and a tip of the downstream upper end (34) and is provided with a rotational axis parallel to the longitudinal direction of the opening;
a support (2) consisting of support (2a) and support (2b), where support (2a) has shaft center (13a) at upstream side relative to shaft center (12) of coating bar (1) in conveyance direction of web (8) and supports coating bar (1) from the bottom at the upstream side while support (2b) has shaft center (13b) at downstream side relative to shaft center (12) of coating bar (1) in conveyance direction of web (8) and supports coating bar (1) from the bottom at the downstream side,
said supports (2a, 2b) being plurality of pairs of rotatable supports (2a, 2b) which are disposed intermittently along a longitudinal direction of the coating bar (1) and which support the coating bar (1) from below in the container (31); and
a weir (37) provided close to an outer periphery of at least one of the supports (2a, 2b), **characterized in that**
a line L2 does not intersect the coating bar (1),
wherein the line L2 passes through a midpoint between points A and B, and is perpendicular to a line L1 and a shaft center of said at least one of the supports (13a, 13b),
the line L1 is tangent to the weir (37) as extending from the shaft center (13a, 13b) of said at least one of the supports (2a, 2b),
the point A is closest to the shaft center (13a, 13b) of said at least one of the supports (2a, 2b) among tangent points of the line L1 and the weir (37),
the point B is an intersection of the line L1 and the outer periphery of said at least one of the supports (2a, 2b), and
the line L1 is a line to contact the weir (37) when the line extending from the shaft center (13a, 13b) of said at least one of the supports (2a, 2b) upward in a vertical direction is gradually inclined as fixing a pivot point of the shaft center (13a, 13b).

2. The coating device (206) according to claim 1, wherein a gap (42) between the weir (37) close to said at least one of the supports (2a, 2b) and the outer periphery of said at least one of the supports (2a, 2b) has a width of 2mm or less, at least in a part at a downstream side relative to a vertical line passing through the shaft center (13a, 13b) of said at least one of the support (2a, 2b).

3. The coating device (206) according to claim 1 or 2, wherein the weir (37) is provided close to any one of the supports (2b) which support the coating bar (1) from below at the downstream side.

4. The coating device (206) according to claim 3, wherein the weirs (37) are provided close to all of the supports (2b) which support the coating bar (1) from below at the downstream side.

5. A coating method using the coating device (206) according to any one of claims 1 to 4, comprising:
supplying the coating fluid (32) to the container (31) from the coating fluid inlet (30);
immersing the coating bar (1) in the coating fluid (32);
pushing the coating bar (1) onto the web (8) conveyed at a predetermined velocity from an upstream side to the downstream side; and
applying the coating fluid (32) dipped with the coating bar (1) to the web (8).

6. A method for producing a resin film having a coating film, comprising:
extruding a polymer with an extruder (200);
forming a sheet of the resin film from the extruded polymer; and
applying the coating fluid (32) to the resin film to form the coating film by the coating method according to claim 5.

7. A method for producing a resin film having a coating film, comprising:
unwinding the resin film with an unwinder;
applying the coating fluid (32) to the unwound resin film to form the coating film by the coating method according to claim 5; and
rolling up the resin film having the coating film with a take-up machine.

## Patentansprüche

1. Beschichtungsvorrichtung (206), umfassend:
- einen Behälter (31) mit einem Beschichtungsfluideinlass (30);
- ein stromaufwärts liegendes oberes Ende (33) und ein stromabwärts liegendes oberes Ende (34), die an einer Oberseite des Behälters (31) vorgesehen sind, die eine Öffnung bilden, deren Längsrichtung einer Längsrichtung des Behälters (31) entspricht;
- eine drehbare Beschichtungsstange (1), die in der Öffnung zwischen einer Spitze des stromaufwärts liegenden oberen Endes (33) und einer Spitze des stromabwärts liegenden oberen Endes (34) vorgesehen ist und mit einer Drehachse parallel zur Längsrichtung der Öffnung versehen ist;
- eine Abstützung (2), die aus einer Abstützung (2a) und einer Abstützung (2b) besteht, wobei die Abstützung (2a) eine Wellenmitte (13a) auf der stromaufwärts liegenden Seite relativ zur Wellenmitte (12) der Beschichtungsstange (1) in Förderrichtung der Bahn (8) aufweist und die Beschichtungsstange (1) von unten auf der stromaufwärts liegenden Seite abstützt, während die Abstützung (2b) eine Wellenmitte (13b) auf der stromabwärts liegenden Seite relativ zur Wellenmitte (12) der Beschichtungsstange (1) in Förderrichtung der Bahn (8) aufweist und die Beschichtungsstange (1) von unten auf der stromabwärts liegenden Seite abstützt,
- eine Mehrzahl von Paaren von drehbaren Abstützungen (2a, 2b), die intermittierend entlang einer Längsrichtung der Beschichtungsstange (1) angeordnet sind und die die Beschichtungsstange (1) von unten im Behälter (31) abstützen; und
- einen Überlauf (37), der in der Nähe eines äußeren Umfangs von mindestens einer der Abstützungen (2a, 2b) vorgesehen ist, **dadurch gekennzeichnet, dass**:
- eine Linie L2 die Beschichtungsstange (1) nicht schneidet,
- wobei die Linie L2 durch einen Mittelpunkt zwischen den Punkten A und B verläuft und senkrecht zu einer Linie L1 und einer Wellenmitte der zumindest einen der Abstützungen (13a, 13b) ist,
- die Linie L1 zum Überlauf (37) tangential ist, wenn sie sich von der Wellenmitte (13a, 13b) der zumindest einen der Abstützungen (2a, 2b) erstreckt,
- der Punkt A am nächsten zur Wellenmitte (13a, 13b) der zumindest einen der Abstützungen (2a, 2b) unter den Tangentenpunkten der Linie L1 und des Überlaufs (37) ist,
- der Punkt B ein Schnittpunkt der Linie L1 und des äußeren Umfangs des zumindest einen der Träger (2a, 2b) ist, und
- die Linie L1 eine Linie ist, um den Überlauf (37) zu berühren, wenn die Linie, die sich von der Wellenmitte (13a, 13b) der zumindest einen der Abstützungen (2a, 2b) nach oben in eine vertikale Richtung erstreckt, allmählich beim Fixieren eines Drehpunkts der Wellenmitte (13a, 13b) geneigt wird.

2. Beschichtungsvorrichtung (206) gemäß Anspruch 1, wobei eine Aussparung (42) zwischen dem Überlauf (37) in der Nähe des zumindest einen der Träger (2a, 2b) und dem äußeren Umfang des zumindest einen der Träger (2a, 2b) eine Breite von 2 mm oder weniger, zumindest in einem Teil auf einer stromabwärts liegenden Seite relativ zu einer vertikalen Linie aufweist, die durch die Wellenmitte (13a, 13b) des zumindest einen der Träger (2a, 2b) verläuft.

3. Beschichtungsvorrichtung (206) gemäß Anspruch 1 oder 2, wobei der Überlauf (37) in der Nähe von einem der Träger (2b) vorgesehen ist, der die Beschichtungsstange (1) von unten auf der stromabwärts liegenden Seite abstützt.

4. Beschichtungsvorrichtung (206) gemäß Anspruch 3, wobei die Überläufe (37) in der Nähe von allen Trägern (2b) vorgesehen sind, die die Beschichtungsstange (1) von unten auf der stromabwärts liegenden Seite abstützen.

5. Beschichtungsverfahren unter Verwendung der Beschichtungsvorrichtung (206) gemäß einem der Ansprüche 1 bis 4, umfassend:
- Zuführen des Beschichtungsfluids (32) zum Behälter (31) vom Beschichtungsfluideinlass (30);
- Eintauchen der Beschichtungsstange (1) in das Beschichtungsfluid (32);
- Verschieben der Beschichtungsstange (1) auf der Bahn (8), die mit einer vorbestimmten Geschwindigkeit von einer stromaufwärts liegenden Seite zur stromabwärts liegenden Seite befördert wird; und
- Aufbringen des Beschichtungsfluids (32), in das die Beschichtungsstange (1) eingetaucht ist, auf die Bahn (8).

6. Verfahren zur Herstellung eines Kunstharzfilms mit einem Beschichtungsfilm, umfassend:
- Extrudieren eines Polymers mit einem Extruder (200);
- Ausbilden einer Folie des Kunstharzfilms aus dem extrudierten Polymer; und
- Aufbringen des Beschichtungsfluids (32) auf den Kunstharzfilm, um den Beschichtungsfilm durch das Beschichtungsverfahren gemäß Anspruch 5 zu bilden.

7. Verfahren zur Herstellung eines Kunstharzfilms mit einem Beschichtungsfilm, umfassend:
- Abwickeln des Kunstharzfilms mit einem Abwickler;
- Aufbringen des Beschichtungsfluids (32) auf den abgewickelten Kunstharzfilm, um den Beschichtungsfilm durch das Beschichtungsverfahren gemäß Anspruch 5 zu bilden; und
- Aufrollen des Kunstharzfilms mit dem Beschichtungsfilm mit einer Aufspulmaschine.

## Revendications

1. Dispositif de revêtement (206) comprenant : un récipient (31) ayant une entrée de fluide de revêtement (30) ;
une extrémité supérieure amont (33) et une extrémité supérieure aval (34) prévues au niveau d'une partie supérieure du récipient (31) formant une ouverture dont la direction longitudinale correspond à une direction longitudinale du récipient (31);
une barre de revêtement rotative (1) qui est prévue dans l'ouverture entre une pointe de l'extrémité supérieure amont (33) et une pointe de l'extrémité supérieure aval (34) et est pourvue d'un axe de rotation parallèle à la direction longitudinale de l'ouverture ;
un support (2) constitué d'un support (2a) et d'un support (2b), où le support (2a) a un centre d'arbre (13a) au niveau d'un côté amont par rapport au centre d'arbre (12) de la barre de revêtement (1) dans une direction de transport d'une bande (8) et supporte la barre de revêtement (1) depuis le fond au niveau du côté amont tandis que le support (2b) a un centre d'arbre (13b) au niveau d'un côté aval par rapport au centre d'arbre (12) de la barre de revêtement (1) dans la direction de transport de la bande (8) et supporte la barre de revêtement (1) depuis le fond au niveau du côté aval,
lesdits supports (2a, 2b) étant une pluralité de paires de supports rotatifs (2a, 2b) qui sont disposés par intermittence le long d'une direction longitudinale de la barre de revêtement (1) et qui supportent la barre de revêtement (1) par le bas dans le récipient (31) ; et
un déversoir (37) prévu à proximité d'une périphérie externe d'au moins l'un des supports (2a, 2b), **caractérisé en ce que**
une ligne L2 ne coupe pas la barre de revêtement (1),
dans lequel la ligne L2 passe par un point médian entre les points A et B, et est perpendiculaire à une ligne L1 et à un centre d'arbre dudit au moins l'un des supports (13a, 13b),
la ligne L1 est tangente au déversoir (37) à mesure qu'elle s'étend à partir du centre d'arbre (13a, 13b) dudit au moins l'un des supports (2a, 2b),
le point A est le plus proche du centre d'arbre (13a, 13b) dudit au moins l'un des supports (2a, 2b) parmi les points de tangence de la ligne L1 et du déversoir (37),
le point B est une intersection de la ligne L1 et de la périphérie externe dudit au moins l'un des supports (2a, 2b), et
la ligne L1 est une ligne pour entrer en contact avec le déversoir (37) lorsque la ligne s'étendant à partir du centre d'arbre (13a, 13b) dudit au moins l'un des supports (2a, 2b) vers le haut dans une direction verticale est progressivement inclinée à mesure qu'on fixe un point de pivotement du centre d'arbre (13a, 13b).

2. Dispositif de revêtement (206) selon la revendication 1, dans lequel un espace (42) entre le déversoir (37) à proximité dudit au moins l'un des supports (2a, 2b) et la périphérie externe dudit au moins l'un des supports (2a, 2b) a une largeur inférieure ou égale à 2 mm, au moins dans une partie au niveau d'un côté aval par rapport à une ligne verticale passant par le centre d'arbre (13a, 13b) dudit au moins l'un des supports (2a, 2b).

3. Dispositif de revêtement (206) selon la revendication 1 ou 2, dans lequel le déversoir (37) est prévu à proximité de l'un quelconque des supports (2b) qui supportent la barre de revêtement (1) par le bas au niveau du côté aval.

4. Dispositif de revêtement (206) selon la revendication 3, dans lequel les déversoirs (37) sont prévus à proximité de tous les supports (2b) qui supportent la barre de revêtement (1) par le bas au niveau du côté aval.

5. Procédé de revêtement utilisant le dispositif de revêtement (206) selon l'une quelconque des revendications 1 à 4, comprenant le fait :
de fournir le fluide de revêtement (32) au récipient (31) à partir de l'entrée de fluide de revêtement (30) ;
d'immerger la barre de revêtement (1) dans le fluide de revêtement (32) ;
de pousser la barre de revêtement (1) sur la bande (8) transportée à une vitesse prédéterminée d'un côté amont au côté aval ; et
d'appliquer le fluide de revêtement (32) dans lequel la barre de revêtement (1) est trempée à la bande (8).

6. Procédé de production d'un film de résine ayant un film de revêtement, comprenant le fait :
d'extruder un polymère avec une extrudeuse (200) ;
de former une feuille du film de résine à partir du polymère extrudé ; et
d'appliquer le fluide de revêtement (32) au film de résine pour former le film de revêtement par le procédé de revêtement selon la revendication 5.

7. Procédé de production d'un film de résine ayant un film de revêtement, comprenant le fait :
de dérouler le film de résine avec un dérouleur ;
d'appliquer le fluide de revêtement (32) au film de résine déroulé pour former le film de revêtement par le procédé de revêtement selon la revendication 5 ; et
d'enrouler le film de résine ayant le film de revêtement avec une machine d'enroulement.
